# EUROPÄISCHE PATENTSCHRIFT

(11) **EP 1 841 637 B1**
(45) Veröffentlichungstag und Bekanntmachung des Hinweises auf die Patenterteilung: **16.03.2011**
(21) Anmeldenummer: 06707862.6
(22) Anmeldetag: 26.01.2006
(51) Int. Cl.: B62D 7/14

(54) **BAUMASCHINE, SOWIE SCHWENKEINRICHTUNG**
CONSTRUCTION MACHINERY AND PIVOTING DEVICE
MACHINE DE CONSTRUCTION ET DISPOSITIF DE ROTATION

(30) Priorität: 26.01.2005 DE 102005003739
(43) Veröffentlichungstag der Anmeldung: 10.10.2007
(73) Patentinhaber: Wirtgen GmbH, 53578 Windhagen (DE)
(72) Erfinder: SMOLDERS, Raymond, Herentals (BE); THIEME, Holger, 53560 Vettelschoss (DE); TEWES, Günter, 53572 Unkel/Rhein (DE)
(74) Vertreter: von Kreisler Selting Werner
(86) Internationale Anmeldenummer: PCT/EP2006/050478
(87) Internationale Veröffentlichungsnummer: WO 2006/079652

(56) Entgegenhaltungen:
- DE-A1- 10 027 083
- GB-A- 2 275 662
- US-A- 4 029 165
- US-A- 4 558 758
- US-A- 4 880 124

## Beschreibung

Die Erfindung betrifft eine Baumaschine nach dem Oberbegriff des Anspruchs 1, sowie eine Schwenkeinrichtung nach Anspruch 14.

Derartige Baumaschinen sind beispielsweise aus der US-4029165 bekannt. Bei solchen Baumaschinen, wird der Maschinenrahmen von einem Fahrwerk mit mehreren Rädern oder Kettenlaufwerken getragen, die über Hubsäulen mit dem Maschinenrahmen gekoppelt sind. Dabei ist der untere Teil der Hubsäule ausfahrbar, um den Maschinenrahmen in eine vorbestimmte Ebene zu heben. Dabei kann jede Hubsäule individuell oder gemeinsam mit anderen Hubsäulen höhenverstellt werden. Der Maschinenrahmen weist eine für einen Transport auf einem Transportfahrzeug geeignete Breite auf. In Längsrichtung weist der Maschinenrahmen eine Länge auf, die ein Vielfaches der Breite beträgt.

Bei der bekannten Baumaschine ist die Schwenklagerung jedes Kettenfaufwerkes koaxial unter einer Hubsäule gelagert, wobei an dem Kettenlaufwerk ein Drehkranz angeordnet ist, der mit Hilfe eines sich am Maschinenrahmen abstützenden Lenkungszylinders eine Lenkung des Kettenlaufwerkes ermöglicht. An dem Drehkranz sind mehrere Anlenklaschen vorgesehen, so dass durch Ummontieren des Lenkungszylinders an andere Anlenklaschen die Möglichkeit besteht, ein Kettenlaufwerk von einer Transportstellung parallel zur Längsrichtung des Maschinenrahmens in eine Arbeitsstellung quer zur Längsrichtung in mehreren Arbeitsschritten zu verschwenken.

In der Transportstellung kann die Baumaschine von einem Transportfahrzeug heruntergefahren und gelenkt werden, während in der Arbeitsstellung die Maschine eine Fahrbahnbreite je nach Länge des Maschinenrahmens bis zu beispielsweise 18 m überbrücken kann.

Nachteilig ist dabei der hohe Montageaufwand an allen Kettenlaufwerken und die Unfall- und Verletzungsgefahr bei den Montagearbeiten.

Der Montageaufwand entsteht dadurch, dass der Lenkungszylinder nur geeignet ist, einen Schwenkwinkel von ca. 45° zu ermöglichen. Deshalb müssen zusätzliche Anlenklaschen an dem Drehkranz vorgesehen sein, um den Lenkungszylinder zum weiteren Verschwenken des Kettenlaufwerkes umbauen zu können und an eine andere Anlenklasche ankoppeln zu können. Dabei bereitet es Schwierigkeiten, die Kolbenstange des Lenkungszylinders zum gelenkigen Verriegeln in eine fluchtende Position mit einer anderen Anlenklasche an dem Drehkranz zu bringen.

Bei einem anderen Ausführungsbeispiel ohne zusätzliche Anlenklaschen kann mit Hilfe einer Koppelstange die Lenkung des Kettenlaufwerkes in Transportstellung auf das auf der anderen Seite des Maschinenrahmens angeordnete Kettenlaufwerk übertragen werden.

Die DE 100 27 083 A1 ein Fahrgestell eines Förderkrans für den Containertransport in Häfen. Im Einzelnen weist der Förderkahn vier Fahrgestelle auf, die mit vier lenkbaren Rädern versehen sind, so dass der Kran vorwärts, rückwärts oder seitlich oder um einen Mittelpunkt rotierend bewegt werden kann.

Bei derartigen Fahrgestellen eines Förderkrans besteht das Problem, dass für jedes Rad ein unterschiedlicher Lenkwinkel eingestellt werden muss, weil jedes Rad rechtwinklig zum Drehungsmittelpunkt stehen muss.

Dementsprechend befasst sich die DE 100 27 083 A1 damit, dass die Räder während z.B. einer Vorwärts- und Rückwärtsbewegung, einer Rotation im Stehen oder einer seitlichen Bewegung des Förderkrans nicht in eine ungünstige Winkelstellung gelenkt werden können.

Bei diesen Fahrgestellen existiert keine Arbeits- oder Transportstellung. Die Räder werden nur gelenkt, wobei ein Lenkwinkel von bis zu 90° möglich ist.

Der Erfindung liegt die Aufgabe zugrunde, eine Baumaschine der eingangs genannten Art sowie eine Schwenkeinrichtung derart weiterzubilden, dass ohne Umbauarbeiten sowohl die Lenkbewegung in der Transportstellung als auch die Schwenkbewegung von der Transportstellung in die Arbeitsstellung und zurück mit einem Schwenkgetriebe ausführbar ist.

Zur Lösung dieser Aufgabe dienen die Merkmale des Anspruchs 1 sowie 14.

Die Erfindung sieht in vorteilhafter Weise vor, dass die Konsolen von zwei benachbarten Hubsäule jeweils über beabstandete Gelenke einerseits mit dem Maschinenrahmen und andererseits mit einer Koppelstange gekoppelt sind. Der gegenseitige Abstand der Gelenke auf einer Konsole einer Hubsäule weist dabei eine Länge auf, die ein Verschwenken der Konsole mit dem Rad oder Kettenlaufwerk um mehr als 90° zulässt. Alternativ kann die Koppelstange nicht geradlinig zwischen den koppelstangenseitigen Gelenken verlaufen, sondern beispielsweise in einer horizontalen Ebene derart geformt sein, dass der kollisionsfreie maximale Schwenkwinkel vergrößert ist. Der Abstand der Gelenke, bzw. die Form der Koppelstange ist dabei derart, dass beim Verschwenken und insbesondere in den Endpositionen des Schwenkgetriebes die Koppelstange einen Abstand zu den maschinenrahmenseitigen Gelenken und/oder zu den Hubsäulen über einen Schwenkbereich von mehr als 90° ausgehend von der Arbeitsstellung einhält. Das Schwenkgetriebe führt sowohl die Lenkbewegung in der Transportstellung als auch die Schwenkbewegung von der Transportstellung in die Arbeitsstellung und zurück aus. Die Erfindung ermöglicht es, ohne Umbau und Montagearbeiten Räder oder Kettenlaufwerken einer Baumaschine von einer Arbeitsstellung in eine Transportstellung und umgekehrt zu überführen und die Räder oder Kettenlaufwerke in der Transportstellung zu lenken.

Aufgrund der wegfallenden Montagearbeiten, ist der Zeitbedarf für die Umstellung der Maschine von der Arbeitsstellung in die Transportstellung und umgekehrt erheblich reduziert, wobei die durch die Montagearbeiten bedingten Unfallgefahren wegfallen.

Die Konsolen der Räder oder Kettenlaufwerke können an dem ortsfesten oberen Teil der Hubsäule drehfest befestigt sein. Die Anordnung der Konsolen an dem oberen Teil der Hubsäulen hat den Vorteil, dass das Schwenkgetriebe weit von der Bodenoberfläche entfernt angeordnet werden kann und somit nicht von dem Boden oder Bearbeitungsmaterial verschmutzt werden kann. Dies erhöht die Betriebssicherheit der Schwenkeinrichtung.

Jede der an den Hubsäulen vorgesehenen Konsolen nimmt zwei Gelenke auf, die gleiche Achsenabstand der Gelenke ermöglicht eine parallelogrammartige Führung der Konsolen.

Der maximale Schwenkwinkel des Schwenkgetriebes ausgehend von der Arbeitsstellung, beträgt über 90° hinaus bis 120°, vorzugsweise 105°. Dies bedeutet, dass das Schwenkgetriebe das Rad oder Kettenlaufwerk ausgehend von der Arbeitsstellung zunächst um 90° bis in die Transportstellung verschwenken kann und darüber hinaus zwecks Einstellung eines Lenkwinkels von +/- 30° relativ zur Fahrtrichtung bis beispielsweise maximal 120° weiter verschwenkt werden kann.

Dabei beträgt der Lenkwinkel des Schwenkgetriebes in der Transportstellung zur einen Seite + 15° bis + 30° bis ein maximaler Schwenkwinkel von insgesamt 105° bis 120° erreicht ist. Es versteht sich, dass in der anderen Richtung auf die Arbeitsstellung hin der Lenkwinkel nicht beschränkt ist, sondern bis auf -90° (Arbeitsstellung) eingestellt werden kann.

Die Manövrierbarkeit der Baumaschine in der Transportstellung ist dabei dadurch besonders erhöht, dass die in Transportstellung vorderen oder hinteren Kettenlaufwerke in die gleiche oder alternativ in die gegenläufige Schwenkrichtung verschwenkt werden können. Nach einer weiteren Alternative können die hinteren Kettenlaufwerke in der Arbeitsstellung verbleiben und lediglich die vorderen Kettenlaufwerke sich in Transportstellung mit oder ohne von 0° abweichendem Lenkwinkel befinden.

Die maschinenrahmenseitigen Gelenke sind in Querträgern des Maschinenrahmens angeordnet, die parallel zur Fahrtrichtung in Arbeitsstellung verlaufen. Die Koppelstange verläuft im Wesentlichen parallel zu dem jeweiligen Querträger des Maschinenrahmens quer zur Fahrtrichtung in Transportstellung.

Bei einem bevorzugten Ausführungsbeispiel ist vorgesehen, dass mehrere Konsolen an jeder Hubsäule mit gegenseitigem vertikalen Abstand vorgesehen sind, die die Koppelstange und/oder eine Antriebseinheit für das der Konsolen erlaubt eine steife Lagerung der Koppelstange sowie des Antriebs für das Schwenkgetriebe, der vorzugsweise aus einer Kolbenzylindereinheit besteht.

Der untere herausfahrbare Teil der Hubsäulen ist vorzugsweise relativ zu dem oberen Teil der Hubsäulen drehfest. Dies kann beispielsweise durch eine quadratische Querschnittsform oder auch mit einem Nutenstein erreicht werden, der zwischen den beiden Teilen der Hubsäule in Nuten verläuft. Eine derartige Hubsäule erhöht die Fahrstabilität und insbesondere die Spurtreue der Baumaschine.

Die Vertikalachsen der in Querrichtung des Maschinenrahmens benachbarten Hubsäulen weisen relativ zu den Achsen der jeweiligen maschinenrahmenseitigen Gelenke der Konsole einen entgegengesetzt gerichteten gleichgroßen Abstand auf. Auf diese Weise ist insbesondere in Arbeitsstellung der Abstand der Vertikalachsen der Hubsäulen vergrößert, so dass die Maschine in Arbeitsstellung eine höhere Stabilität aufweist.

In der Arbeitsstellung können die Vertikalachsen der in Fahrtrichtung benachbarten Hubsäulen einen unterschiedlichen Abstand von den Achsen der entsprechenden koppelstangenseitigen Gelenke aufweisen. Auf diese Weise kann die Koppelstange parallelogrammartig angeordnet werden, so dass das Schwenkgetriebe in der Transportstellung eine Lenkbewegung ausführen kann.

Bei einem alternativen Ausführungsbeispiel kann auch vorgesehen sein, dass die Vertikalachsen der Hubsäulen koaxial zu der Achse des entsprechenden maschinenrahmenseitigen Gelenkes ist. Dies kann beispielsweise dadurch erreicht werden, dass der Querträger des Maschinenrahmens ein Drehgelenk bildend die Hubsäule umschließt. Der Hubsäulenquerschnitt ist dann vorzugsweise kreisförmig.

Beim Verschwenken der Räder oder Kettenlaufwerke von der Transportstellung in die Arbeitsstellung und umgekehrt wird die Laufrichtung der Räder oder Kettenlaufwerke beibehalten.

Die Baumaschine ist vorzugsweise eine Straßenbaumaschine, insbesondere ein Gleitschalungsfertiger oder ein Bürstensprühgerät.

Im Folgenden werden unter Bezugnahme auf die Zeichnungen Ausführungsbeispiele der Erfindung näher erläutert:

Es zeigen:
- Fig. 1: ein Ausführungsbeispiel der Erfindung in Form einer Bürstensprühmaschine,
- Fig. 2: eine Draufsicht auf den Maschinenrahmen einer Baumaschine in Arbeitsstellung,
- Fig. 3: eine Baumaschine gemäß Fig. 2, bei der sich die Kettenlaufwerke in einer Zwischenstellung befinden,
- Fig. 4: eine Abbildung gemäß den Fign. 2 und 3, bei der sich die Kettenlaufwerke in der Transportstellung befinden,
- Fig. 5: den möglichen Lenkeinschlag der Kettenlaufwerke in der Transportstellung, und
- Fig. 6: ein alternatives Ausführungsbeispiel zu Fig. 5.

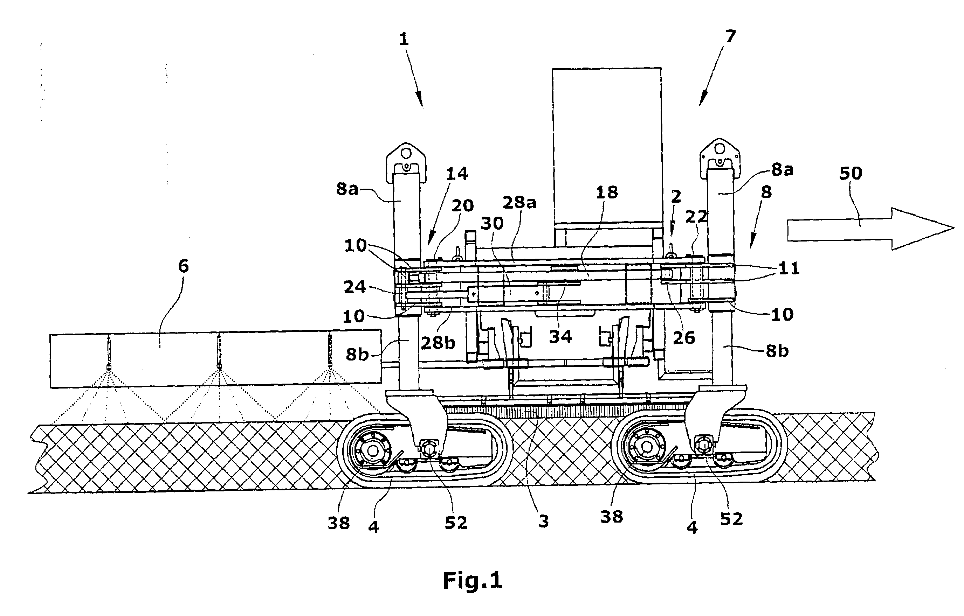

Fig. 1 zeigt eine Baumaschine in Form einer Bürstensprühmaschine, mit der eine neu erstellte Straßenoberfläche mit Hilfe eines Bürstenaggregates 3 gebürstet werden kann und mit Hilfe einer Sprühanlage 6 anschließend mit einem flüssigen Nachbehandlungsmittel besprüht werden kann.

Der Maschinenrahmen 2 weist eine für einen Transport auf einem Transportfahrzeug geeignete Breite auf, so dass die Maschine auf dem Transportfahrzeug auf einer Straße zum Einsatzort transportiert werden kann. In aufweisen, die ein Vielfaches der Breite beträgt, indem beispielsweise Verbreiterungselemente einsetzbar sind, oder der Maschinenrahmen teleskopierbar ist. Dabei kann in der in Fig. 1 gezeigten Arbeitsstellung eine Fahrbahnbreite von beispielsweise bis zu 18 m überbrückt werden. Die Fahrtrichtung ist in den jeweiligen Zeichnungen durch einen Pfeil 50, 60 angedeutet.

Die Baumaschine 1 weist ein Fahrwerk mit mehreren Rädern und/oder Kettenlaufwerken 4 auf, die den Maschinenrahmen 2 über Hubsäulen 8 höhenverstellbar tragen.

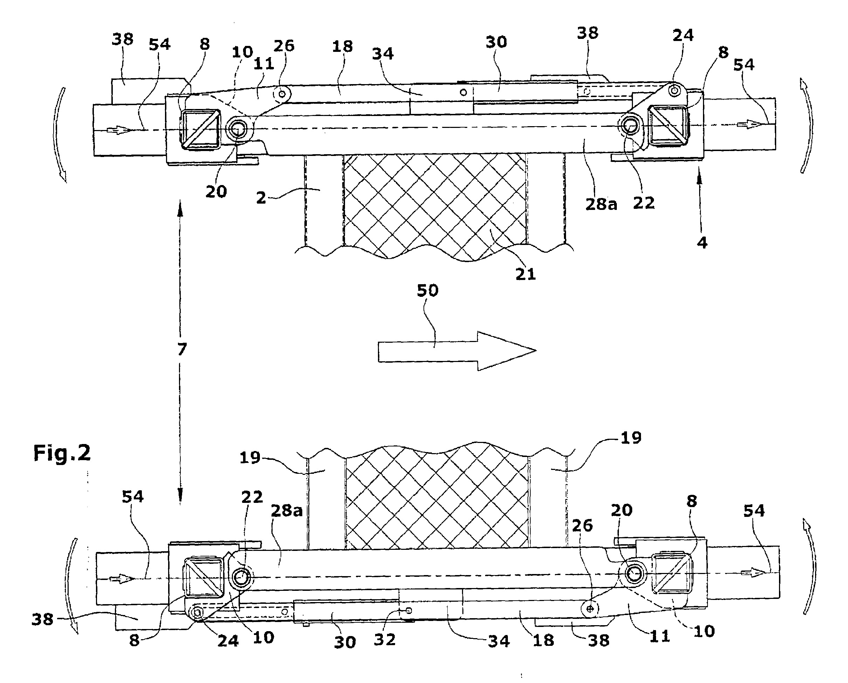

Die Räder oder Kettenlaufwerke 4 können von einer in Fig. 2 gezeigten Arbeitsstellung 7 in eine in den Fign. 1 sowie 4 und 5 gezeigten Transportstellung 5 mit Hilfe eines Schwenkgetriebes 14 überführt werden. In der Arbeitsstellung, wie in den Fign. 1 und 2 gezeigt, verlaufen die Kettenlaufwerke 4 parallel zu Querträgern 28 des Maschinenrahmens 2. In der Transportstellung verlaufen die Kettenlaufwerke 4 parallel zur Längserstreckung des Maschinenrahmens, also um 90° verschwenkt und quer zu den Querträgern 28. Es versteht sich, dass ein derartiger Aufbau mit einem von einem Fahrwerk mit Hubsäulen 8 getragenen Maschinenrahmen 2 für eine Vielzahl von Baumaschinen, insbesondere Straßenbaumaschinen verwendbar ist. Insofern ist die in Fig. 1 dargestellte Bürstensprühmaschine nur ein mögliches Verwendungsbeispiel. Ein wichtiges Anwendungsgebiet sind Gleitschalungsfertiger.

Das zum Verschwenken der in den Fign. gezeigten Kettenlaufwerke 4 verwendete Schwenkgetriebe 14 kann sowohl die Schwenkbewegung von der Arbeitsstellung in die Transportstellung und zurück ausführen, als auch die Lenkbewegung in der Transportstellung.

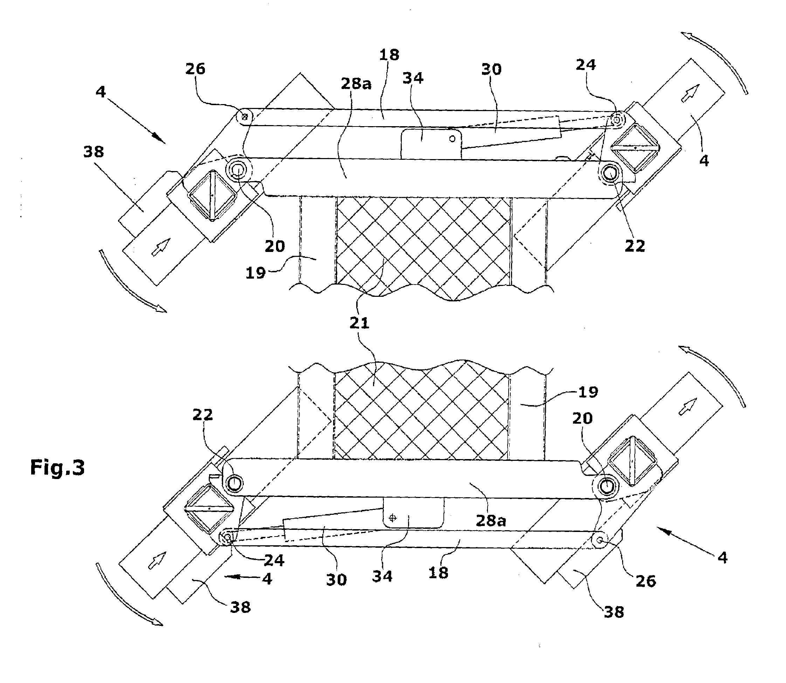

Fig. 3 zeigt eine Zwischenstellung der Kettenlaufwerke 4 beim Übergang von der Arbeitsstellung in die Transportstellung.

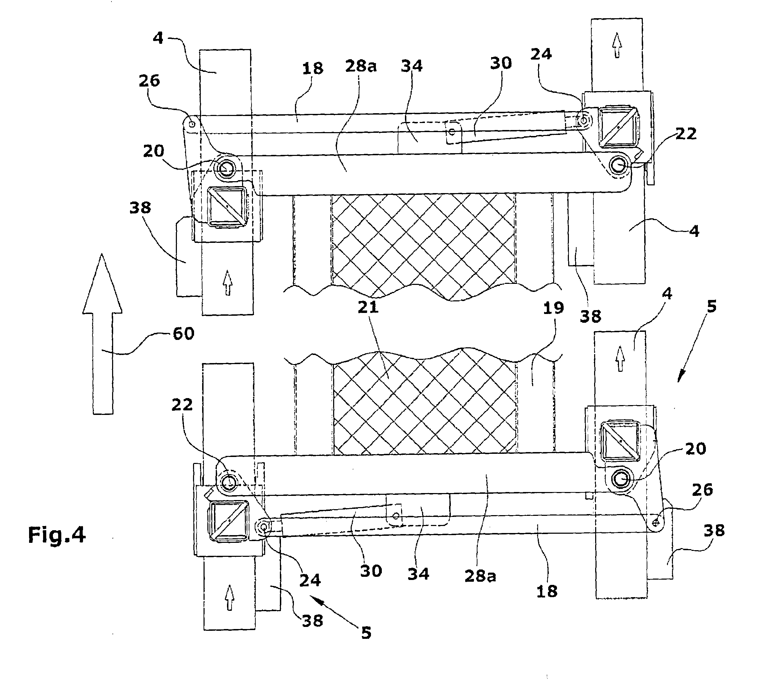

Die in Fig. 4 dargestellte Transportstellung zeigt den Platzbedarf für den Transport der Baumaschine. Die Transportbreite beträgt ca. 2,50 m.

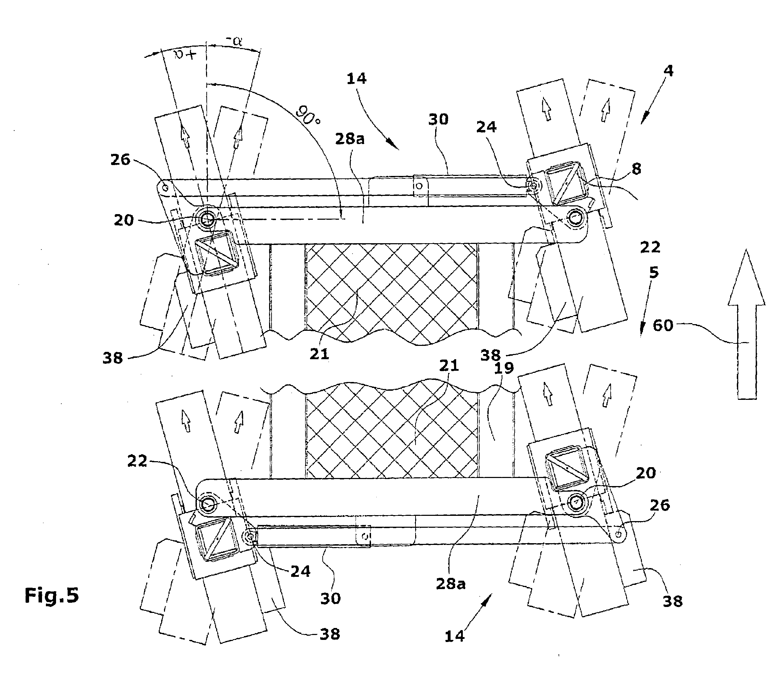

Die Lenkbewegung in der Transportstellung ist der Fig. 5 zu entnehmen, in der beispielsweise ein Lenkwinkel von +/- α wiedergegeben ist.

Es versteht sich, da an beiden Querseiten des Maschinenrahmens 2 ein Schwenkgetriebe 14 vorgesehen ist, dass die Kettenlaufwerke 4 an den kurzen Seiten des Maschinenrahmens 2 zum Lenken in Transportstellung in die gleiche Richtung, oder auch in entgegengesetzte Richtungen verschwenkt werden können. Insbesondere besteht auch die Möglichkeit, auch die in Fahrtrichtung 60 hinteren Kettenlaufwerke in der Arbeitsstellung zu belassen.

Das an einen Maschinenrahmen 2 ankoppelbare Schwenkgetriebe 14 besteht aus den nachfolgend beschriebenen Elementen.

An den oberen Teilen 8a der Hubsäulen 8 sind Konsolen 10, 11 in Form von Gelenkträgerplatten drehfest befestigt.

Die Konsolen 10, 11 weisen jeweils zwei Gelenke 20, 24; 22, 26 auf, die einerseits mit dem Maschinenrahmen 2 und andererseits mit einer im Wesentlichen parallel zu Querträgern 28 des Maschinenrahmens 2 verlaufenden Koppelstange 18 gekoppelt sind.

Der gegenseitige Abstand der Gelenke 20, 24 und 22, 26 weist eine Länge auf, die ein Verschwenken der Konsolen 10, 11 um mehr als 90° zulässt. Die Koppelstange 18 bildet mit den unterschiedlich gestalteten Konsolen 10, 11 eine Parallelogrammführung der Kettenlaufräder 4, so dass eine beispielsweise an dem koppelstangenseitigen Gelenk 24 angekoppelte Antriebseinheit 30 beide benachbarten Kettenlaufwerke 4 parallel verschwenken kann. Zur Justierung der Lenkwinkel an den mit der Koppelstange gekoppelten Hubsäulen kann die Koppelstange hinsichtlich ihrer Länge verstellbar sein.

Abgesehen von der Wahl eines ausreichenden gegenseitigen Abstandes der Gelenke auf den Konsolen 10, 11 kann ein kollisionsfreier Schwenkwinkel von 120° auch dadurch erreicht werden, dass der Verlauf der Koppelstange 18

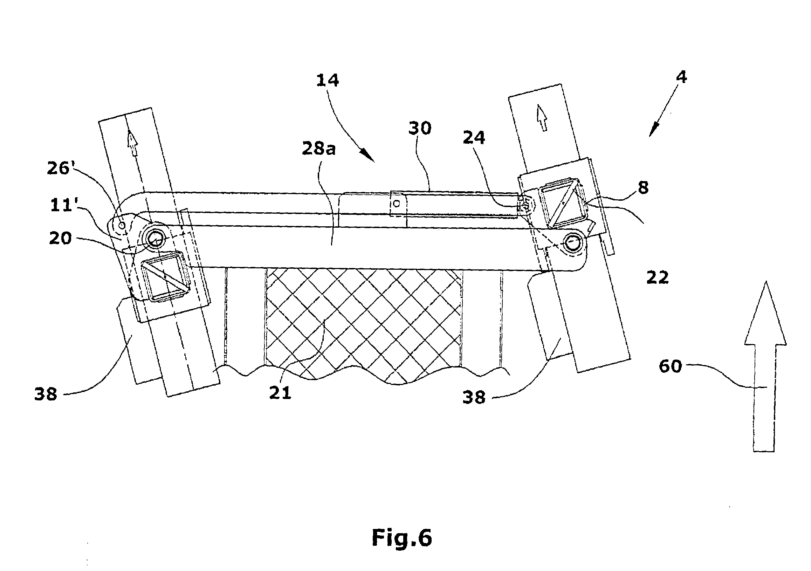

Horizontalebene nicht geradlinig ist, sondern beispielsweise gekrümmt oder winkelförmig ist, wie beispielsweise der Fig. 6 entnehmbar ist. Dort ist eine modifizierte Konsole 11' gezeigt, die ein näher an dem Gelenk 24 angeordnetes Gelenk 26' aufweist. Grundsätzlich möglich ist auch eine in der Vertikalebene nicht geradläufig verlaufende Koppelstange. Letztlich kommt es darauf an, dass beim Verschwenken der Kettenlaufwerke 4 und insbesondere in den Endpositionen des Schwenkgetriebes 14 die Koppelstange 18 einen Abstand zu den maschinenrahmenseitigen Gelenken 20, 22 und/oder zu den Hubsäulen 8 über einen Schwenkbereich von mehr als 90° ausgehend von der Arbeitsstellung einhält.

Trotz der unterschiedlichen Gestaltungen der Konsolen 10 und 11 haben die maschinenrahmenseitigen Gelenke 20, 22 einen gleichen Abstand von den koppelstangenseitigen Gelenken 24, 26.

Von Bedeutung ist auch der Abstand der Hubsäulen 8 von dem maschinenrahmenseitigen Gelenken 20, 22. Ein größerer Abstand kann den kollisionsfreien maximalen Schwenkwinkel vergrößern. Desweiteren können Aussparungen an den Querträgern 28a, 28b den maximalen Schwenkwinkel vergrößern, indem diese die Hubsäule 8 aufnehmen.

Wie bereits erläutert und aus Fig. 5 ersichtlich, erstreckt sich der gesamte Schwenkbereich des Schwenkgetriebes 14 auf einen maximalen Schwenkwinkel von 120°, vorzugsweise 105°. Auf diese Weise ist bei Betätigung der gleichen Antriebseinheit 30 über das Schwenkgetriebe 14 auch eine Lenkung in der Transportstellung 5 der Kettenlaufwerke 4, wie in Fig. 5 gezeigt, möglich. In den Zeichnungen sind die Querträger 28a,b des Maschinenrahmens 2 als Anlenkstelle für die maschinenrahmenseitigen Gelenke 20, 22 dargestellt. Es versteht sich, dass die maschinenrahmenseitigen Gelenke 20, 22 auch an anderen Stellen des Maschinenrahmens angelenkt sein können.

Die Antriebseinheit 30 besteht vorzugsweise aus einer Kolbenzylindereinheit, wobei die Kolbenstange an das Gelenk 24 angekoppelt ist. Der Zylinder ist gelenkig über ein Gelenk 32 an dem Maschinenrahmen 2 z.B. an einem von den Kolbenzylindereinheit verläuft in den Endpositionen des Schwenkgetriebes, wie sie in Fig. 2 und Fig. 4 entnehmbar sind, im wesentlichen parallel zu den Querträgern 28a, 28b und/oder zu der Koppelstange 18.

Die Hubsäulen 8 haben einen quadratischen Querschnitt, so dass der untere Teil 8b gegenüber dem oberen Teil 8a der Hubsäule 8 gegen Verdrehen gesichert ist. Es versteht sich, dass die Hubsäulen 8 auch einen kreisförmigen Querschnitt haben können, der auf andere Weise gegen Verdrehen gesichert ist.

Aus Fig. 2 ist des weiteren eine begehbare Plattform 21 ersichtlich, die von gegebenenfalls verlängerbaren oder teleskopierbaren Längsträgern 19 begrenzt ist.

In Fig. 1 ist entnehmbar, dass die Konsolen 10, 11 mehrfach übereinander an dem oberen Teil der Hubsäule 8 ortsfest angeordnet sein können, wobei hinsichtlich der mit vertikalem Abstand voneinander angeordneten Konsolen 10 erkennbar ist, dass zwischen den beiden oberen Konsolen 10 die Koppelstange 18 mit einem Ende an das Gelenk 24 angelenkt ist, wobei zwischen den beiden unteren Konsolen 10 die Kolbenstange der Antriebseinheit 30 an das Gelenk 24 angekoppelt ist. Das Gelenk 24 erstreckt sich somit vertikal durch alle drei Konsolen 10.

An der benachbarten Hubsäule 8 sind lediglich zwei Konsolen 11 vorgesehen, die zwischen sich das anderen Ende der Koppelstange 18 an dem Gelenk 26 aufnehmen. Unterhalb der Konsolen 11 ist eine weitere Konsole in der Form der Konsolen 10 angeordnet, die gemeinsam mit den Konsolen 11 und den Querträgern 28a, 28b das Gelenk 22 aufnimmt.

Der Querträger 28 besteht aus einem oberen Teil 28a und einem parallel dazu mit vertikalem Abstand verlaufenden unteren Teil 28b, durch deren jeweiligen Enden sich die Gelenke 20, 22 erstrecken.

Die hydraulischen Antriebe 38 der Kettenlaufwerke sind so angeordnet, dass der untere Trum der Laufkette auf Zug beansprucht ist. Die Laufrichtung der Umbauarbeiten hinsichtlich der Drehrichtung der hydraulischen Antriebsmotoren erforderlich sind.

Vorzugsweise ist vorgesehen, dass die Achsen der Gelenke 20, 22 die gewichtsbelastete horizontale Achse 52 des Kettenlaufwerks 4 schneiden. Außerdem kann die Achse der Gelenke 20, 22 auch die Längsmittellinie der Kettenlaufwerke 4, wie aus Fig. 2 ersichtlich, schneiden. Auf diese Weise wird eine leichtere Schwenkbarkeit der Kettenlaufwerke 4 erzielt.

In der Arbeitsstellung der Kettenlaufwerke 4 kann eine Lenkung entsprechend dem Straßenverlauf durch einen unterschiedlichen Antrieb der beiderseits der Straße angeordneten Kettenlaufwerke 4 erzielt werden.

## Patentansprüche

1. Baumaschine (1)
- mit einem Maschinenrahmen (2), der eine für einen Transport auf einem Transportfahrzeug geeignete Breite, sowie in Längsrichtung des Maschinenrahmens (2) eine Länge, die ein Vielfaches der Breite beträgt, aufweist,
- mit einem Fahrwerk mit mehreren Rädern oder Kettenlaufwerken (4), die über Hubsäulen (8) den Maschinenrahmen (2) tragen, bei dem die Räder oder Kettenlaufwerke (4) von einer Arbeitsstellung (7) quer zur Längsrichtung des Maschinenrahmens (2) in eine Transportstellung (5) parallel zur Längsrichtung verschwenkbar sind und in der Transportstellung (5) mit einem auf die Räder oder Kettenlaufwerke wirkenden Schwenkgetriebe (14) lenkbar sind,
**dadurch gekennzeichnet,**
**dass** die Hubsäulen (8) Konsolen (10, 11) aufweisen,
**dass** die Konsolen (10, 11) von zwei benachbarten Hubsäulen (8) jeweils über ein erstes Gelenk (20, 22) einerseits mit dem Maschinenrahmen (2) und andererseits über ein zweites Gelenk (24, 26) mit einer die Konsolen (10, 11) verbindenden Koppelstange (18) gekoppelt sind,
wobei der gegenseitige Abstand der Gelenke (20, 24; 22, 26) auf einer Konsole (10, 11) eine derartige Länge und/oder die Koppelstange (18) eine derartige Form aufweist, dass beim Verschwenken und in den Endpositionen des Schwenkgetriebes (14) die Koppelstange (18) einen parallelen Abstand zu den maschinenrahmenseitigen ersten Gelenken (20, 22) und/oder zu den Hubsäulen (8) über einen Schwenkwinkelbereich von mehr als 90° ausgehend von der Arbeitsstellung einhält, und
**dass** das Schwenkgetriebe (14) sowohl die Lenkbewegung in der Transportstellung (5) als auch die Schwenkbewegung von der Transportstellung (5) in die Arbeitsstellung (7) und zurück ausführt.

2. Baumaschine nach Anspruch 1, **dadurch gekennzeichnet, dass** die Konsolen (10, 11) der Räder oder Kettenlaufwerke (4) an dem oberen Teil (8a) der Hubsäule (8) drehfest befestigt sind.

3. Baumaschine nach Anspruch 1 oder 2, **dadurch gekennzeichnet, dass** jede Konsole (10, 11) zwei Gelenke (20, 24) aufweist, die einen vorgegebenen gleichen Abstand voneinander halten.

4. Baumaschine nach einem der Ansprüche 1 bis 3, **dadurch gekennzeichnet, dass** der maximale Schwenkwinkel (14) des Schwenkgetriebes (14) von der Arbeitsstellung (7) ausgehend über 90°, maximal 105° bis 120° beträgt.

5. Baumaschine nach einem der Ansprüche 1 bis 4, **dadurch gekennzeichnet, dass** der Lenkwinkel des Schwenkgetriebes (14) in der Transportstellung (5) ausgehend zur einen Seite -90° und zur anderen Seite über 0° bis +30°, vorzugsweise bis +15° beträgt.

6. Baumaschine nach einem der Ansprüche 1 bis 5, **dadurch gekennzeichnet, dass** die maschinenrahmenseitigen Gelenke (20, 22) in Querträgern (28) des Maschinenrahmens (2) angeordnet sind und die Koppelstange (18) im Wesentlichen parallel zu einem Querträger (28, 28a, 28b) des Maschinenrahmens (2) verläuft.

7. Baumaschine nach einem der Ansprüche 1 bis 6, **dadurch gekennzeichnet, dass** mehrere Konsolen (10, 11) an jeder Hubsäule (8) mit gegenseitigem vertikalen Abstand vorgesehen sind, die die Koppelstange (18) und/oder eine Antriebseinheit (30) für das Schwenkgetriebe (14) zwischen sich aufnehmen.

8. Baumaschine nach einem der Ansprüche 1 bis 7, **dadurch gekennzeichnet, dass** der untere herausfahrbare Teil (8b) einer Hubsäule (8) relativ zu dem oberen Teil (8a) der Hubsäule drehfest ist.

9. Baumaschine nach einem der Ansprüche 1 bis 8, **dadurch gekennzeichnet, dass** die Vertikalachsen (9) der in Querrichtung des Maschinenrahmens (2) benachbarten Hubsäulen (8) relativ zu den Achsen der jeweiligen maschinenrahmenseitigen Gelenke (20, 22) der Konsole (10, 11) einen entgegengesetzt gerichteten gleichgroßen Abstand aufweisen.

10. Baumaschine nach einem der Ansprüche 1 bis 9, **dadurch gekennzeichnet, dass** die Vertikalachsen (9) der in Fahrtrichtung benachbarten Hubsäulen (8) einen unterschiedlichen Abstand von den Achsen der entsprechenden koppelstangenseitigen Gelenke (24, 26) aufweisen.

11. Baumaschine nach einem der Ansprüche 1 bis 8, **dadurch gekennzeichnet, dass** die Vertikalachse (9) der Hubsäulen (8) koaxial zu der Achse des entsprechenden maschinenrahmenseitigen Gelenkes (20) ist.

12. Baumaschinen nach einem der Ansprüche 1 bis 11, **dadurch gekennzeichnet, dass** beim Verschwenken der Räder oder Kettenlaufwerke (4) von der Transportstellung in die Arbeitsstellung und umgekehrt, die Laufrichtung der Räder oder Kettenlaufwerke beibehalten wird.

13. Baumaschine nach einem der Ansprüche 1 bis 12, **dadurch gekennzeichnet, dass** die Baumaschine (1) eine Straßenbaumaschine, insbesondere ein Gleitschalungsfertiger oder ein Bürstensprühgerät ist.

14. Schwenkeinrichtung mit einem Schwenkgetriebe (14), das Räder oder Kettenlaufwerke (4) einer Baumaschine (1) mit einem Maschinenrahmen (2) lenkt, wobei der Maschinenrahmen (2) eine für einen Transport auf einem Transportfahrzeug geeignete Breite, sowie in Längsrichtung des Maschinenrahmens (2) eine Länge, die ein Vielfaches der Breite beträgt, aufweist, und ein Fahrwerk aufweist mit mehreren Rädern oder Kettenlaufwerken (4), die über Hubsäulen (8) den Maschinenrahmen (2) tragen, bei dem die Räder oder Kettenlaufwerke (4) von einer Arbeitsstellung (7) quer zur Längsrichtung des Maschinenrahmens (2) in eine Transportstellung (5) parallel zur Längsrichtung verschwenkbar sind und in der Transportstellung (5) mit dem auf die Räder oder Kettenlaufwerke wirkenden Schwenkgetriebe (14) lenkbar sind,
**dadurch gekennzeichnet,**
**dass** die Hubsäulen (8) Konsolen (10, 11) als Teil eines Schwenkgetriebes (14) aufweisen,
**dass** die Konsolen (10, 11) von zwei benachbarten Hubsäulen (8) jeweils über ein erstes Gelenk (20, 22) einerseits mit dem Maschinenrahmen (2) und andererseits über ein zweites Gelenk (24, 26) mit einer die Konsolen (10, 11) verbindenden Koppelstange (18) gekoppelt sind,
wobei der gegenseitige Abstand der Gelenke (20, 24; 22, 26) auf einer Konsole (10, 11) eine derartige Länge und/oder die Koppelstange (18) eine derartige Form aufweist, dass beim Verschwenken und in den Endpositionen des Schwenkgetriebes (14) die Koppelstange (18) einen parallelen Abstand zu den maschinenrahmenseitigen ersten Gelenken (20, 22) und/oder zu den Hubsäulen (8) über einen Schwenkwinkelbereich von mehr als 90° ausgehend von der Arbeitsstellung einhält, und
wobei sowohl die Lenkbewegung in der Transportstellung (5) als auch die Schwenkbewegung von der Transportstellung (5) in die Arbeitsstellung (7) und zurück durch das Schwenkgetriebe (14) ausführbar ist.

## Claims

1. Construction machine (1)
- with a machine frame (2) that shows a width that is suitable for transport on a transport vehicle, as well as a length in the longitudinal direction of the machine frame (2) that is a multiple of the width,
- with a chassis with several wheels or crawler track units (4) that support the machine frame (2) via lifting columns (8), in which the wheels or crawler track units (4) are capable of being swivelled from a working position (7) transverse to the longitudinal direction of the machine frame (2) to a transport position (5) parallel to the longitudinal direction, and are capable of being steered in the transport position (5) by way of a swivel gear (14) that acts upon the wheels or crawler track units,
**characterized in that,**
the lifting columns (8) show consoles (10, 11),
the consoles (10, 11) of two adjacent lifting columns (8) are coupled, by way of a first articulation (20, 22), with the machine frame (2) on the one hand and, by way of a second articulation (24, 26) with a coupling rod (18) on the other hand, which coupling rod connects said consoles (10, 11),
where the mutual distance of the articulations (20, 24; 22, 26) on a console (10, 11) is of such a length and/or the coupling rod (18) shows such a shape that, when swivelling and in the limit positions of the swivel gear (14), the coupling rod (18) maintains a parallel distance to the first articulations (20, 22) facing the machine frame and/or to the lifting columns (8) over a swivelling angle range in excess of 90°, starting from the working position, and
the swivel gear (14) effects both the steering movement in the transport position (5), as well as the swivelling movement from the transport position (5) to the working position (7) and back.

2. Construction machine in accordance with claim 1, **characterized in that** the consoles (10, 11) of the wheels or crawler track units (4) are attached to the upper part (8a) of the lifting column (8) in a non-rotatable manner.

3. Construction machine in accordance with claim 1 or 2, **characterized in that** each console (10, 11) shows two articulations (20, 24) which maintain a pre-determined identical distance to one another.

4. Construction machine in accordance with one of the claims 1 to 3, **characterized in that** the maximum swivelling angle (14) of the swivel gear (14) is in excess of 90°, maximum 105° to 120°, starting from the working position (7).

5. Construction machine in accordance with one of the claims 1 to 4, **characterized in that** the steering angle of the swivel gear (14) is -90° to the one side and from 0° to +30°, preferably up to +15°, to the other side, starting in the transport position (5).

6. Construction machine in accordance with one of the claims 1 to 5, **characterized in that** the articulations (20, 22) facing the machine frame are arranged in crossbeams (28) of the machine frame (2) and that the coupling rod (18) runs essentially parallel to a crossbeam (28, 28a, 28b) of the machine frame (2).

7. Construction machine in accordance with one of the claims 1 to 6, **characterized in that** several consoles (10, 11) are provided at each lifting column (8) with a mutual vertical distance, the said consoles (10, 11) accommodating between them the coupling rod (18) and/or a drive unit (30) for the swivel gear (14).

8. Construction machine in accordance with one of the claims 1 to 7, **characterized in that** the lower, extendable part (8b) of a lifting column (8) is arranged in a non-rotatable manner relative to the upper part (8a) of the lifting column.

9. Construction machine in accordance with one of the claims 1 to 8, **characterized in that** the vertical axes (9) of the adjacent lifting columns (8) when seen in transverse direction of the machine frame (2) show identical distances, in opposite directions, relative to the axes of the corresponding articulations (20, 22) of the console (10, 11) that face the machine frame.

10. Construction machine in accordance with one of the claims 1 to 9, **characterized in that** the vertical axes (9) of the adjacent lifting columns (8) when seen in the direction of travel may differ in distance from the axes of the corresponding articulations (24, 26) facing the coupling rod.

11. Construction machine in accordance with one of the claims 1 to 8, **characterized in that** the vertical axis (9) of the lifting columns (8) is coaxial to the axis of the corresponding articulation (20) facing the machine frame.

12. Construction machine in accordance with one of the claims 1 to 11, **characterized in that** the running direction of the wheels or crawler track units is maintained while swivelling the wheels or crawler track units (4) from the transport position to the working position and vice versa.

13. Construction machine in accordance with one of the claims 1 to 12, **characterized in that** the construction machine (1) is a road construction machine, in particular a slipform paver or a texture curing machine.

14. Pivoting device comprising a swivel gear (14) steering the wheels or crawler track units (4) of a construction machine (1) with a machine frame (2), wherein the machine frame (2) shows a width that is suitable for transport on a transport vehicle, as well as a length in the longitudinal direction of the machine frame (2) that is a multiple of the width, and a chassis with several wheels or crawler track units (4) that support the machine frame (2) via lifting columns (8), in which the wheels or crawler track units (4) are capable of being swivelled from a working position (7) transverse to the longitudinal direction of the machine frame (2) to a transport position (5) parallel to the longitudinal direction, and are capable of being steered in the transport position (5) by way of a swivel gear (14) that acts upon the wheels or crawler track units,
**characterizedinthat**,
the lifting columns (8) show consoles (10, 11) as part of a swivel gear (14),
the consoles (10, 11) of two adjacent lifting columns (8) are coupled, by way of a first articulation (20, 22,), with the machine frame (2) on the one hand and, by way of a second articulation (24, 26) with a coupling rod (18) on the other hand, the coupling rod connecting the consoles (10, 11),
where the mutual distance of the articulations (20, 24; 22, 26) on a console (10, 11) is of such a length and/or the coupling rod (18) shows such a shape that, when swivelling and in the limit positions of the swivel gear (14), the coupling rod (18) maintains a distance to the articulations (20, 22) facing the machine frame and/or to the lifting columns (8) over a swivelling angle range in excess of 90°, starting from the working position, and
where both the steering movement in the transport position (5), as well as the swivelling movement from the transport position (5) to the working position (7) and back can be effected by the swivel gear (14).

## Revendications

1. Engin (1)
- comprenant un bâti de machine (2) présentant une largeur appropriée pour le transport sur un véhicule de transport et une longueur, vue dans la direction longitudinale du bâti de machine (2), qui est un multiple de la largeur,
- comprenant un châssis avec plusieurs roues ou trains de roulement à chenille (4) supportant ledit bâti de machine (2) par des colonnes de levage (8), dans lequel les roues ou les trains de roulement à chenille (4) sont aptes à être pivotés d'une position de travail (7), transversale à la direction longitudinale du bâti de machine (2), à une position de transport (5), parallèle à ladite direction longitudinale, et dans lequel les roues ou les trains de roulement à chenille sont dirigeables, dans la position de transport (5), par un mécanisme de pivotement (14) agissant sur les roues ou les trains de roulement à chenille,
**caractérisé en ce que**
les colonnes de levage (8) comportent des consoles (10, 11),
les consoles (10, 11) de deux colonnes de levage (8) voisines sont chacune raccordées, d'un part, au bâti de machine (2) par un premier joint (20, 22) et, d'autre part, à une tige de couplage (18) par un deuxième joint (24, 26), ladite tige reliant lesdites consoles (10, 11) entre eux,
la distance entre les joints (20, 24; 22, 26) sur une console (10, 11) ayant une telle longueur et/ou ladite tige de couplage (18) ayant une telle forme que, lors du pivotement et dans les positions extrêmes dudit mécanisme de pivotement (14), la tige de couplage (18) maintient une distance parallèle aux premiers joints (20, 22), côté bâti de machine, et/ou aux colonnes de levage (8) dans un plage de pivotement de plus de 90° partant de la position de travail, et
ledit mécanisme de pivotement (14) effectuant non seulement le mouvement directionnel dans la position de transport (5), mais aussi le pivotement de la position de transport (5) à la position de travail (7) et retour.

2. Engin selon la revendication 1, **caractérisé en ce que** lesdites consoles (10, 11) des roues ou des trains de roulement à chenille (4) sont fixés à la partie haute (8a) de la colonne de levage (8) de manière non rotative.

3. Engin selon la revendication 1 ou 2, **caractérisé en ce que** chaque console (10, 11) comporte deux joints (20, 24) présentant une distance mutuelle égale prédéterminée.

4. Engin selon l'une quelconque des revendications 1 à 3, **caractérisé en ce que** la plage de pivotement (14) maximale dudit mécanisme de pivotement (14) dépasse 90°, au maximum de 105° à 120°, partant de la position de travail (7).

5. Engin selon l'une quelconque des revendications 1 à 4, **caractérisé en ce que**, partant de la position de transport (5), l'angle de direction dudit mécanisme de pivotement (14) est -90° dans une direction et plus de 0° jusqu'à +30°, de préférence jusqu'à + 15°.

6. Engin selon l'une quelconque des revendications 1 à 5, **caractérisé en ce que** les joints (20, 22), côté bâti de machine, sont disposés dans des traverses (28) du bâti de machine (2), et que la tige de couplage (18) s'étend sensiblement en parallèle à une traverse (28, 28a, 28b) du bâti de machine (2).

7. Engin selon l'une quelconque des revendications 1 à 6, **caractérisé en ce que** plusieurs consoles (10, 11) sont prévues à chaque colonne de levage (8) avec une distance verticale mutuelle, lesdites consoles recevant entre eux ladite tige de couplage (18) et/ou une unité d'entrainement (30) pour ledit mécanisme de pivotement (14).

8. Engin selon l'une quelconque des revendications 1 à 7, **caractérisé en ce que** la partie basse (8b) télescopique d'une colonne de levage (8) est bon rotative par rapport à la partie haute (8a) de ladite colonne de levage.

9. Engin selon l'une quelconque des revendications 1 à 8, **caractérisé en ce que** les axes verticaux (9) des colonnes de levage (8) voisines dans la direction transversale dudit bâti de machine (2) présentent une distance égale opposée par rapport aux axes des joints (20, 22) respectifs, côté bâti de machine, des consoles (10, 11).

10. Engin selon l'une quelconque des revendications 1 à 9, **caractérisé en ce que** les axes verticaux (9) des colonnes de levage (8) voisines dans la direction de marche présentent une distance différente des axes des joints (24, 26) respectifs, côté tige de couplage.

11. Engin selon l'une quelconque des revendications 1 à 8, **caractérisé en ce que** l'axe vertical (9) des colonnes de levage (8) est coaxial à l'axe du joint (20) respectif, côté bâti de machine.

12. Engin selon l'une quelconque des revendications 1 à 11, **caractérisé en ce que** lors du pivotement des roues ou des trains de roulement à chenille (4) de la position de transport à la position de travail et vice versa, le sens de marche des roues ou trains de roulement à chenille est maintenu.

13. Engin selon l'une quelconque des revendications 1 à 12, **caractérisé en ce que** l'engin (1) est un engin routier, notamment une machine à coffrage glissant ou une machine de traitement de surface.

14. Dispositif de pivotement comprenant un mécanisme de pivotement (14) dirigeant des roues ou trains de roulement à chenille (4) d'un engin (1) comportant un bâti de machine (2), ledit bâti de machine (2) présentant une largeur appropriée pour le transport sur un véhicule de transport et une longueur, vue dans la direction longitudinale du bâti de machine (2), qui est un multiple de la largeur, et comprenant un châssis avec plusieurs roues ou trains de roulement à chenille (4) supportant ledit bâti de machine (2) par des colonnes de levage (8), dans lequel les roues ou les trains de roulement à chenille (4) sont aptes à être pivotés d'une position de travail (7), transversale à la direction longitudinale du bâti de machine (2), à une position de transport (5), parallèle à ladite direction longitudinale, et dans lequel les roues ou les trains de roulement à chenille sont dirigeables, dans la position de transport (5), par ledit mécanisme de pivotement (14) agissant sur les roues ou les trains de roulement à chenille,
**caractérisé en ce que**
les colonnes de levage (8) comportent des consoles (10, 11) comme partie du mécanisme de pivotement (14),
les consoles (10, 11) de deux colonnes de levage (8) voisines sont chacune raccordées, d'un part, au bâti de machine (2) par un premier joint (20, 22) et, d'autre part, à une tige de couplage (18) par un deuxième joint (24, 26), ladite tige reliant lesdites consoles (10, 11) entre eux,
la distance entre les joints (20, 24; 22, 26) sur une console (10, 11) ayant une telle longueur et/ou ladite tige de couplage (18) ayant une telle forme que, lors du pivotement et dans les positions extrêmes dudit mécanisme de pivotement (14), la tige de couplage (18) maintient une distance parallèle aux premiers joints (20, 22), côté bâti de machine, et/ou aux colonnes de levage (8) dans un plage de pivotement de plus de 90° partant de la position de travail, et
ledit mécanisme de pivotement (14) effectuant non seulement le mouvement directionnel dans la position de transport (5), mais aussi le pivotement de la position de transport (5) à la position de travail (7) et retour.
